# EUROPEAN PATENT APPLICATION

(11) **EP 4 343 937 A1**
(43) Date of publication of application: **27.03.2024**
(21) Application number: 22848697.3
(22) Date of filing: 29.07.2022
(51) Int. Cl.: H01M 50/209, H01M 50/244, H01M 50/249

(54) **CHARGING AND SWAPPING SYSTEM FOR DETACHABLE BATTERY PACK**

(30) Priority: 30.07.2021 CN 202121765703 U
(71) Applicant: BYD Company Limited, Shenzhen, Guangdong 518118 (CN)
(72) Inventor: GUO, Shu, Shenzhen, Guangdong 518118 (CN)
(74) Representative: DehnsGermany Partnerschaft von Patentanwälten
(86) International application number: PCT/CN2022/109117
(87) International publication number: WO 2023/006093

(57) **Abstract**

A charging and swapping system with a detachable battery pack includes a battery pack (1) and a support plate (2). The battery pack (1) includes a casing (11) and a battery unit arranged in the casing (11). The support plate (2) is configured to connect with the battery pack (1) through a detachable connection. The support plate (2) is separated from the battery pack (1) through the detachable connection when the battery pack (1) is to be replaced on a vehicle or when charging of the battery pack at a charging station is completed. Quick disconnection and installation of the battery pack (1) and the support plate (2) are realized through the detachable connection, thereby improving user experience when the vehicle requires battery charging or swapping.

## Description

### CROSS-REFERENCE TO RELATED APPLICATION

This application claims priority to and benefits of Chinese Patent Application No. 202121765703.5, filed on July 30, 2021. The entire content of the above-referenced application is incorporated herein by reference.

### FIELD

The present disclosure relates to the technical field of vehicles, and particularly to a charging and swapping system with a detachable battery pack.

### BACKGROUND

With the development of society, in order to conserve energy and reduce the emission of environmental hazards, more and more fuel vehicles such as gasoline vehicles have been replaced by electric vehicles, and the number of electric vehicles is increasing. At present, new-energy electric vehicles are mostly charged by fixed charging piles. Existing charging piles may support alternating-current (AC) charging or direct-current (DC) charging. However, regardless of the charging manner, the vehicle being charged cannot be driven before the charging is completed. An electric vehicle supporting fast charging needs to be equipped with a cooling system with higher heat dissipation power, which increases the costs of the vehicle, occupies space of the vehicle, and makes the heat dissipation structure of the battery system more complex. To meet the fast charging demand of the electric vehicle at low temperature, it is necessary to increase the electrical power to satisfy the heating rate of the battery system, resulting in the risk of increased energy consumption and shortened mile range of the electric vehicle. Existing fast charging solutions for battery packs of electric vehicles cannot meet users' needs.

### SUMMARY

The present disclosure aims to solve, at least to some extent, one of the technical problems in the related art.

Therefore, the present disclosure provides a charging and swapping system with a detachable battery pack.

The charging and swapping system with a detachable battery pack according to the present disclosure includes a battery pack and a support plate. The battery pack includes a casing and a battery unit arranged in the casing. The support plate is configured to connect with the battery pack through a detachable connection. The support plate is separated from the battery pack through the detachable connection when the battery pack needs to be replaced on a vehicle or when charging of the battery pack at a charging station is completed.

According to the charging and swapping system with a detachable battery pack in the present disclosure, quick disconnection and installation of the battery pack and the support plate are realized through the detachable connection. When the vehicle requires battery swapping, the battery pack to be replaced is quickly disconnected from the vehicle and replaced with a battery pack that has been charged, i.e., the battery pack has been charged is quickly installed on the vehicle. This can effectively shorten the charging waiting time for charging the battery pack, thereby improving the charging experience of the user for charging the battery pack.

Additional aspects and advantages of the present disclosure will be partly given in and partly apparent from the description below, or understood through practice of the present disclosure.

### BRIEF DESCRIPTION OF THE DRAWINGS

FIG. 1 is a schematic structural diagram of a charging and swapping system with a detachable battery pack according to an embodiment of the present disclosure;
FIG. 2 is a schematic structural diagram of a charging and swapping system with a detachable battery pack according to another embodiment of the present disclosure; and

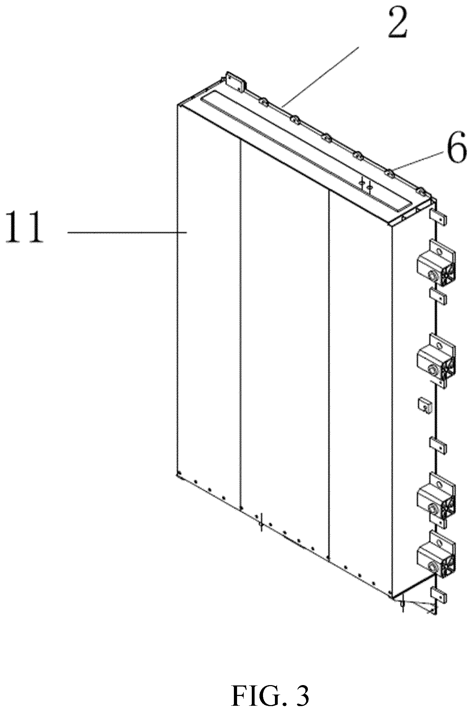

FIG. 3 is a schematic structural diagram of a charging and swapping system with a detachable battery pack according to still another embodiment of the present disclosure.

### DETAILED DESCRIPTION

Embodiments of the present disclosure will be described in detail below with reference to the accompanying drawings in which the same or like reference characters refer to the same or like elements or elements having the same or like functions throughout. The embodiments described below with reference to the accompanying drawings are exemplary, and are intended to explain the present disclosure, rather than limiting the present disclosure.

A charging and swapping system with a detachable battery pack of the present disclosure will be described in detail below with reference to the accompanying drawings. A charging and swapping system with a detachable battery pack according to an embodiment of the present disclosure includes a battery pack 1 and a support plate 2. The battery pack 1 includes a casing 11 and a battery unit arranged in the casing 11. The support plate 2 is configured to connect with the battery pack 1 through a detachable connection. The support plate 2 is separated from the battery pack 1 through the detachable connection when the battery pack 1 is to be replaced on a vehicle or when charging of the battery pack 1 at a charging station is completed.

The support plate 2 may be arranged on a charging base for thermal management connection between the charging base and the battery pack 1. The support plate 2 may alternatively be arranged on a frame of the vehicle, and configured for use in installation and charging and discharging operations of the battery pack 1 or for protecting the battery pack.

According to the charging and swapping system with a detachable battery pack in the embodiment of the present disclosure, quick disconnection and installation of the battery pack and the support plate are realized through the detachable connection. When the vehicle requires battery swapping, the battery pack to be replaced is quickly disconnected from the vehicle through the detachable connection and replaced with a battery pack that has been charged, i.e., the battery pack has been charged is quickly installed on the vehicle. This can effectively shorten the charging waiting time for charging the battery pack, thereby improving the charging experience of the user for charging the battery pack.

The detachable connection in the embodiments of the present disclosure may be implemented in a variety of ways. For example, the detachable connection may be realized by mechanical limiting through structural design, or the detachable connection may be realized by a buckling structure or bolt connection. In addition, the detachable connection may be realized by adhesion using an adhesive. When the battery system is in a normal temperature range or during normal driving of the vehicle, normal strength of the adhesive is ensured, thereby achieving an effective connection between the battery pack and the support plate. When a condition is met, the adhesion performance of the adhesive is weakened to realize the disconnection of the connected parts. The specific structure and disconnection manner of the detachable connection in the present disclosure will be described below through specific embodiments.

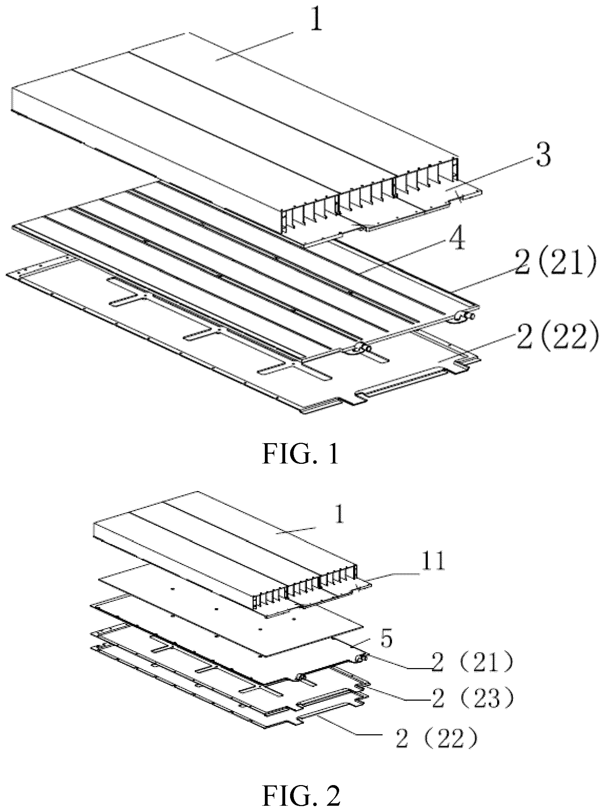

As an embodiment of the detachable connection, one of the casing 11 and the support plate 2 may be provided with a groove, the other one may be provided with a protrusion, and the groove is engaged with the protrusion. For example, the casing 11 is provided with a groove 3 and the support plate 2 is provided with a protrusion 4, or the casing 11 is provided with a protrusion 4 and the support plate 2 is provided with a groove 3. In any case, the protrusion 4 and the groove 3 need to be engaged with each other, as shown in FIG. 1.

In the embodiments of the present disclosure, the specific shapes of the protrusion 4 and the groove 3 are not limited, as long as the protrusion 4 and the groove 3 can be engaged with each other to achieve the detachable connection. For example, the protrusion 4 may be of an elongated or cross configuration, and the groove 3 may also be of an elongated or cross configuration. To realize a firmer connection, a structure including a plurality of cross-shaped grooves 3 or protrusiones 4 may be adopted. In the embodiments of the present disclosure, the protrusiones 4 and the grooves 3 may be arranged at intervals of a distance, or may be respectively arranged in a middle portion and an edge portion of the support plate 2 and a middle portion and an edge portion of the casing 11. The specific number of protrusiones 4 and the specific number of grooves 3 are not limited in the embodiments of the present disclosure.

As an embodiment of the detachable connection, a sliding guide rail may be arranged on the casing 11, the support plate 2 may be provided with a protruding portion, the protruding portion is engaged with the sliding guide rail, the protruding portion is slidable on the sliding guide rail, and when the battery pack 1 is to be replaced or charging of the battery pack is completed, the support plate 2 slides out on the sliding guide rail through the protruding portion, to realize rapid separation from the battery pack 1. Through the configuration of the guide rail and the protruding portion 3, a more automated detachable connection can be realized between the battery pack 1 and the support plate 2. The support plate 2 can slide on the guide rail. A driving device for driving the movement of the guide rail may further be arranged. In this way, when the battery pack 1 and the support plate 2 need to be separated, the driving device may be started to realize effective separation.

As an embodiment of the detachable connection, an edge of the support plate 2 is provided with a limiting groove 5, and an edge of the casing 11 is provided with a flange engaged with the limiting groove 5. In this way, through the mechanical limiting method where the limiting groove 5 and the flange are respectively arranged at the edges, the local engagement of the support plate with the battery pack 1 can be realized, making the connection relationship between the support plate 2 and the battery pack 1 firmer.

In an embodiment of the present disclosure, the support plate 2 and the battery pack 1 are connected by a detachable adhesive, and the detachable adhesive is configured to realize separation of the battery pack 1 and the support plate 2 under a preset condition. In the embodiments of the present disclosure, the adhesive needs to meet a certain condition, so that the adhesive can be bonded to an object to be bonded when adhesion is required, and two objects bonded by the adhesive can be separated from each other when disconnection is required. The adhesive is not particularly limited in the present disclosure, as long as the adhesive can be controlled to realize adhesion and separation.

The manner of separating the battery pack 1 from the support plate 2 may be determined according to the characteristics of the adhesive. For example, the separation of the battery pack 1 and the support plate 2 may be realized by an adhesive remover, or the separation of the battery pack 1 and the support plate 2 may be realized by controlling a temperature of the adhesive to at least a value to weaken bonding strength of the adhesive. For example, some adhesives are sensitive to temperature, and when the temperature is greater than a preset value, the bonding strength may be weakened to realize the separation of the battery pack 1 and the support plate 2. During the separation of the two objects bonded by the adhesive, it is necessary to ensure as much as possible that the battery pack 1 and the support plate 2 are not damaged.

The casing 11 and the support plate 2 may each be provided with a threaded hole 6. In this way, the casing 11 and the support plate 2 may be detachably connected through a bolt. Specifically, a plurality of threaded holes 6 may be respectively formed along an edge of the casing 11 and a corresponding edge of the support plate 2. Bolts are mounted on the casing 11 and the support plate 2 by a certain pre-tightening force.

The detachable connection between the battery pack 1 and the support plate 2 in the embodiments of the present disclosure may be for facilitating the removal of the battery pack 1 from the vehicle or facilitating the quick disconnection of the battery pack 1 from the charging position on the charging station. In other words, in the embodiments of the present disclosure, the support plate 2 may be mounted on the vehicle and detachably connected to the battery pack 1, or may be mounted on the charging base of the charging station and detachably connected to the battery pack 1.

When the battery pack 1 is mounted on the vehicle, the support plate 2 is a component of the vehicle, e.g., a chassis or a floor. When the battery pack 1 is placed on a charging base of the charging station outside the vehicle, the support plate 2 may be a part of the charging base.

The support plate 2 in the embodiments of the present disclosure may be an independent component or may be an existing structural component. For example, the support plate 2 may be at least one of a cooling plate 21, a protection plate 22, a heating pad, or a thermal insulation plate 23, or may integrate functions of at least two of a cooling plate 21, a protection plate 22, a heating pad, and a thermal insulation plate 23, or the support plate 2 may independently arranged. At least one of the cooling plate 21, the protection plate 22, the heating pad, and the thermal insulation plate 23 is connected to the battery pack 1. That the battery pack 1 is provided with the groove 3 or the protrusion may include that the cooling plate 21, the protection plate 22, the heating pad, or the thermal insulation plate 23 integrated with the battery pack 1 is provided with the groove 3 or the protrusion. Whether the support plate 2 is an existing mechanism or is a newly arranged component is not limited in the embodiments of the present disclosure, as long as the structure serving as the support plate 2 can be detachably connected to the battery pack 1.

After being removed from the vehicle, the battery pack 1 may be directly placed on the charging base of the charging station, and the battery pack 1 is electrically connected to the charging device to charge the battery pack 1. In other words, the charging and swapping system with a detachable battery pack 1 further includes a charging device. The charging device is electrically connected to the battery pack 1 when the battery pack 1 is charged at the charging station.

When the battery pack on an electric vehicle is removed for battery charging or swapping, the support plate includes a first support plate on the electric vehicle and may further include a second support plate of the charging station. A detachable connection between the first support plate and the battery pack is configured to realize quick disconnection of the battery pack to be charged and realize quick installation of another battery pack that has been charged. A detachable connection between the second support plate and the battery pack is configured to realize quick installation of the battery pack to be charged and realize quick disconnection of another battery pack being charged when the charging is completed. In other words, the first support plate is configured for realizing the disconnection of a deficient battery pack from the vehicle and the installation of a fully charged battery pack on the vehicle. The charging base may include the second support plate to realize quick connection of the battery pack to the charging base. In addition, the charging station may not include the second support plate, and the battery pack to be charged is directly placed on the charging base of the charging station, without fixing. For example, when an upper surface of the charging base is a flat surface and a lower surface of the casing of the battery pack is a groove structure or flat surface, the second support plate may be omitted.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inner", "outer", "clockwise", "counterclockwise", "axial", "radial", and "circumferential" are based on orientation or position relationships shown in the accompanying drawings, and are used only for ease and brevity of illustration and description, rather than indicating or implying that the mentioned apparatus or component need to have a particular orientation or need to be constructed and operated in a particular orientation. Therefore, such terms should not be construed as limiting of the present disclosure.

Moreover, the terms "first" and "second" are used herein for purposes of description, and are not intended to indicate or imply relative importance or implicitly point out the number of the indicated technical feature. Therefore, the features defined by "first" and "second" may explicitly or implicitly include one or more features. In the description of the present disclosure, "multiple" and "a plurality of" mean two or more, unless otherwise particularly defined.

In the present disclosure, unless otherwise clearly specified and defined, the terms "mount", "connect", "couple", "fix" and variants thereof should be interpreted in a broad sense, for example, may be a fixed connection, a detachable connection, or an integral connection; may be a mechanical connection or an electrical connection; or may be a direct connection, an indirectly connection via an intermediate medium, or communication between the interiors of two components or an interaction relationship between two elements. For those of ordinary skill in the art, the specific meanings of the above terms in the present disclosure can be understood according to specific circumstances.

In the present disclosure, unless otherwise explicitly specified and defined, a first feature being "over" or "below" a second feature may mean that the first feature and the second feature are in direct contact, or the first feature and the second feature are in indirect contact with each other through an intermediate medium. Moreover, the first feature being "over", "above", and "on" the second feature includes that the first feature is directly above or obliquely above the second feature, or merely means that the horizontal height of the first feature is higher than the horizontal height of the second feature. The first feature being "under", "below", and "underneath" the second feature includes that the first feature is directly below or obliquely below the second feature, or merely means that the horizontal height of the first feature is lower than the horizontal height of the second feature.

In the description of the specification, the description with reference to the terms "an embodiment", "some embodiments", "example", "specific example", or "some example" and so on means that specific features, structures, materials or characteristics described in connection with the embodiment or example are embraced in at least one embodiment or example of the present disclosure. In the specification, the illustrative expression of the above terms is not necessarily referring to the same embodiment or example. Moreover, the described specific features, structures, materials or characteristics may be combined in any suitable manners in one or more embodiments. In addition, where there are no contradictions, the various embodiments or examples described in this specification and features of various embodiments or examples can be combined by those skilled in the art.

Although the embodiments of the present disclosure have been illustrated and described above, it is to be understood that the above embodiments are exemplary and not to be construed as limiting the present disclosure, and that changes, modifications, substitutions and alterations can be made by those skilled in the art without departing from the scope of the present disclosure.

## Claims

1. A charging and swapping system with a detachable battery pack, comprising:
a battery pack, comprising a casing and a battery unit arranged in the casing;
a support plate, configured to connect with the battery pack through a detachable connection, the support plate being separated from the battery pack through the detachable connection when the battery pack is to be replaced on a vehicle or when charging of the battery pack at a charging station is completed.

2. The charging and swapping system with a detachable battery pack according to claim 1, wherein the casing is provided with a groove and the support plate is provided with a protrusion, or the casing is provided with a protrusion and the support plate is provided with a groove; and the protrusion is engaged with the groove.

3. The charging and swapping system with a detachable battery pack according to any one of claims 1 to 2, wherein the protrusion is of an elongated or cross configuration, and the groove is of an elongated or cross configuration.

4. The charging and swapping system with a detachable battery pack according to any one of claims 1 to 3, wherein a sliding guide rail is arranged on the casing; and
the support plate is provided with a protruding portion, the protruding portion is engaged with the sliding guide rail, the protruding portion is slidable on the sliding guide rail, and when the battery pack is to be replaced or charging of the battery pack is completed, the support plate slides out on the sliding guide rail through the protruding portion, to realize rapid separation from the battery pack.

5. The charging and swapping system with a detachable battery pack according to any one of claims 1 to 4, wherein an edge of the support plate is provided with a limiting groove, and an edge of the casing is provided with a flange engaged with the limiting groove.

6. The charging and swapping system with a detachable battery pack according to any one of claims 1 to 5, wherein the support plate and the battery pack are connected by a detachable adhesive, and the detachable adhesive is configured to realize separation of the battery pack and the support plate under a preset condition.

7. The charging and swapping system with a detachable battery pack according to claim 6, wherein the separation of the battery pack and the support plate is realized by an adhesive remover, or the separation of the battery pack and the support plate is realized by controlling a temperature of the adhesive to at least a value to weaken bonding strength of the adhesive.

8. The charging and swapping system with a detachable battery pack according to any one of claims 1 to 7, wherein the casing and the support plate are each provided with a threaded hole, and the casing and the support plate are detachably connected through a bolt.

9. The charging and swapping system with a detachable battery pack according to any one of claims 1 to 8, wherein the battery pack is mounted on the vehicle, and the support plate is a chassis or a floor; or, when the battery pack is placed on a charging base of the charging station outside the vehicle, the support plate is a part of the charging base.

10. The charging and swapping system with a detachable battery pack according to any one of claims 1 to 9, wherein the support plate is at least one of a cooling plate, a protection plate, or a thermal insulation plate, or the support plate integrates functions of at least two of a cooling plate, a protection plate, and a thermal insulation plate.

11. The charging and swapping system with a detachable battery pack according to any one of claims 1 to 10, further comprising a charging device, electrically connected to the battery pack when the battery pack is charged at the charging station.

12. The charging and swapping system with a detachable battery pack according to any one of claims 1 to 11, the support plate comprises a first support plate and a second support plate, the first support plate being placed on the vehicle and the second support plate being placed on a charging station;
a detachable connection between the first support plate and the battery pack is configured to realize quick disconnection of the battery pack to be charged and realize quick installation of another battery pack that has been charged; and
a detachable connection between the second support plate and the battery pack is configured to realize quick installation of the battery pack to be charged and realize quick disconnection of another battery pack being charged when the charging is completed.
